# EUROPÄISCHE PATENTSCHRIFT

(11) **EP 0 852 359 B1**
(45) Veröffentlichungstag und Bekanntmachung des Hinweises auf die Patenterteilung: **15.07.1998**
(21) Anmeldenummer: 96120698.4
(22) Anmeldetag: 20.12.1996
(51) Int. Cl.: G06F 17/00, H04N 1/387

(54) **Verfahren und Vorrichtung zur Erstellung einer Druckvorlage**
Method and apparatus for generating pre-press
Méthode et appareil pour élaborer une maquette d'impression

(43) Veröffentlichungstag der Anmeldung: 08.07.1998
(73) Patentinhaber: AD-ON Agentur für Handelskommunikation GmbH iG, 64331 Weiterstadt (DE)
(72) Erfinder: Petzold, Peter, 64342 Seeheim/Jungenheim (DE); Hoffmann, Michael, 60594 Frankfurt am Main (DE); Müller-Romheld, Martin, 61440 Oberursel (DE)
(74) Vertreter: Weber, Walter, Dipl.-Ing.(FH)

(56) Entgegenhaltungen:
- EP-A- 0 453 802
- EP-A- 0 733 965
- DE-A- 4 430 274
- DE-A-19 507 780
- US-A- 5 272 549
- US-A- 5 327 265
- "Reif für die Insel", Chip, März 1996, Nr. 3, Seiten 212-214

## Beschreibung

Die Erfindung betrifft ein Verfahren zur Erstellung einer Druckvorlage mittels eines zentralen Rechners, der über ein Datennetz mit Computern von Anwendern in Verbindung steht, sowie einer Vorrichtung zur Durchführung des Verfahrens.

Ursprünglich fand die Herstellung von Druckvorlagen manuell durch Zeichnen oder Filmmontage statt. In der Reproduktion wurde dann die Drucktform, beispielsweise die Offsetdruckplatte, anhand dieser Druckvorlage erstellt. Inzwischen stehen den Reproduktionsanstalten Computer-Arbeitsplätze zur Verfügung, von denen mit Hilfe eines zentralen Rechners Satz und Gestaltung einer Druckvorlage derart erfolgen können, daß mit dem erstellten Datensatz die Druckform hergestellt werden kann. Solche Verfahren zur Erstellung von Druckvorlagen erfordern jedoch wegen der hochauflösenden Darstellungen, wie sie für die Herstellung der Druckformen benötigt werden, große Datenmengen. Dafür sind entsprechende Rechnerkapazitäten und Speicherplätze erforderlich, ebenso große Übertragungskapazitäten zwischen dem Computer-Arbeitsplatz und dem zentralem Rechner. Dies ist in den Reproduktionsanstalten kein Problem, da die technischen Voraussetzungen vor Ort geschaffen wurden.

Soll nun die Erstellung einer Druckvorlage in adäquater Zeit von einem Computer aus erfolgen, der nicht vor Ort unmittelbar mit dem zentralen Rechner vernetzt ist, sondern mit diesem iiber ein Datennetz, wie das Internet, Intranet oder ein ähnliches verbunden ist, so treten bei diesen großen Datenmengen unlösbare technische Probleme auf. Die Übertragungskapazitäten insbesondere der öffentlichen Datennetze sind viel zu gering, um eine Kommunikation zwischen dem Computer des Anwenders und einem zentralen Rechner in der Weise herzustellen, wie dies in der Reproduktionsanstalt realisiert ist. Es ist dabei auch keine Lösung, dem Anwender das Grafikprogramm zur Verfügung zu stellen. Selbst wenn dem entfernten Anwender ein eigenes Grafikprogramm zur Verfügung steht, ist es auch keine Lösung, dem Anwender die Vorlagenelemente per Datenträger zur Verfügung zu stellen, da dies die erforderliche ständige Aktualität verhindern würde, abgesehen davon, daß ein zur Verfügung stehender Computer eventuell nicht die notwendige Kapazität aufweist und auch die Übertragung einer fertigen Druckvorlage hoher Auflösung über das öffentliche Datennetz unwirtschaftlich lange dauern würde.

Aus dem Dokument US-A-5 327 265 ist ein System bekannt, das aus einem zentralen Rechner und einem Anwenderrechner besteht. Im zentralen Rechner werden hochauflösende Bilder gespeichert ; diese Bilder werden dem Anwender im geringer Auflösung übermittelt, so daß der Anwender die Bilder in seine gewünschte Darstellung bringer kann.

Die fertige Darstellung wird dann dem zentralen Rechner übermittelt. Aus den übermittelten Daten, mit geringer Auflösung, wird eine hochauflösende Druckvorlage erstellt.

Der Erfindung liegt die Aufgabe zugrunde, ein Verfahren der eingangs genannten Art derart auszugestalten, daß es trotz geringer Übertragungskapazität des zur Verfügung stehenden Datennetzes möglich ist, eine Druckvorlage hoher Auflösung auf der Grundlage der Eingaben des Anwenders an seinem Computer zu erstellen. Des weiteren soll eine Vorrichtung zur Durchführung des Verfahrens verfügbar gemacht werden.

Die Aufgabe wird erfindungsgemäß durch die Merkmale der Ansprüche I und II gelöst.

Das Anwendergrafikprogramm führt in einer Netzwerksprache (HTML, Java, Javascript, o.ä.) den Dialog mit dem Anwender beispielsweise über das Internet, wobei ihm die Darstellungselemente (Grafikelemente, Bildmotive, Texte, Logos und ähnliches) zur Verfügung gestellt werden. Der Anwenter erstellt damit eine grafische Datei, die der gewünschten Druckvorlage entspricht, um dann die Informationen über seine gewählte Gestaltung über das Netz an den zentralen Rechner zu geben.

Die Datenmenge der übertragenen Daten ist dadurch verringert, daß eine geringere Auflösung gewählt wird als die, die zur Erstellung der Druckvorlage erforderlich ist. Die Auflösung wird so gewählt, daß sich der Anwender, wenn er die Grafik mittels des Anwendergrafikprogramms und den Darstellungselementen erstellt, ein gutes Bild vom Aussehen der endgültigen Druckvorlage machen kann. Zu diesem Zweck reicht eine wesentlich geringere Datenmenge aus als die, die zur Herstellung einer Druckvorlage erforderlich ist. Da der zentrale Rechner die Zuordnung der vom Anwender ausgewählten grafischen Daten geringer Auflösung zu den entsprechenden Daten hoher Auflösung seines Programms "kennt", kann er die Auswahl, Anordnung sowie gewählten Variationen des Anwenders in seinem Programm nachvollziehen und auf diese Weise die Druckvorlage in einer so hohen Auflösung erstellen, wie sie für einen hochwertigen Druck erforderlich ist.

Durch die Erfindung wird es somit möglich, über ein öffentlich zugängliches Datennetz, wie das Internet, aus großer Entfernung mit einem zur Verfügung stehenden Computer eine Druckvorlage derart zu konzipieren, daß der entfernte zentrale Rechner aus dem Konzept eine Druckvorlage hoher Auflösung herstellen kann. Dies ist trotz der begrenzten Übertragungskapazität des Datennetzes und trotz der begrenzten Rechnerleistung des zur Verfügung stehenden Computers innerhalb relativ kurzer Zeit realisierbar. Dadurch sind die technischen Schwierigkeiten überwunden, die bisher einer Remote-Bearbeitung von Druckvorlagen über Datennetze im Wege standen. Außerdem steht dem Anwender die neueste Version des Programms und der Darstellungselemente jederzeit zur Verfügung. Neben seinem Konzept für die Druckvorlage kann er noch weitere Daten übermitteln, wodurch er die Möglichkeit hat, von seinem Computer aus jederzeit einen kompletten Druckauftrag zu vergeben.

Die Weiterbildungen des Verfahrens, wie sie in den Unteransprüchen angegeben sind, dienen einer höheren Wirtschaftlichkeit durch Verkürzung der Übertragungszeiten, weitere technische Möglichkeiten sowie zweckmäßige Ausgestaltungen. Alle diese Weiterbildungen lassen sich auch bei der Vorrichtung zur Durchführung des Verfahrens realisieren, indem der zentrale Rechner mit einem Programm zur Durchführung dieser Weiterbildungen des Verfahrens geladen wird.

Eine wesentliche Ersparnis von Übertragungszeit wird dadurch erreicht, daß die vom Anwendergrafikprogramm an den zentralen Rechner übermittelten Informationen Parameterdateien sind, aus denen der zentrale Rechner mittels der Pendants Bilder und Texte der Druckvorlage erstellt. Dabei wird die Tatsache genutzt, daß reine Textinformationen (ASCII-Code) wesentlich schneller übertragen werden als Grafikdateien. Dieser Weg kann gegangen werden, da im zentralen Rechner die Darstellungsmöglichkeiten des Anwenderprogramms hinterlegt sind und deshalb für die Reproduktion der vom Anwender gewünschten Darstellung eine Identifikation der Darstellungselemente, ihrer Plazierung und einer eventuellen Größen-, Farb- oder Gestaltungsvariation ausreicht. Eine solche Erfassung von Informationen als Parameterdatei zur Identifikation einer Grafik hat gegenüber der Information als hochaufgelöste Grafik den Vorteil, daß die erforderliche Datenmenge auf ein Hunderstel bis ein Tausendstel reduziert wird.

Um für den Anwender einen großen Gestaltungsspielraum zu ermöglichen, kann jedoch auch vorgesehen weiden, daß die vom Anwendergrafikprogramm dem zentralen Rechner übermittelten Informationen Bilder geringerer Auflösung als die Bilder des hochaufgelösten Grafikprogramms sind, wobei der zentrale Rechner mittels der Pendants Darstellungen der Druckvorlagen erstellt. Auf diese Weise wird der Variationsreichtum wesentlich erhöht, da auch Gestaltungen einbezogen werden, die sich in ihrer Vielzahl nicht mehr zu Parameterdateien zuordnen lassen, bei denen aber eine Zuordnung von geringerer zu größerer Auflösung möglich ist. Als Beispiel sind hier verschiedene perspektivische Ansichten eines Gegenstandes oder Momentdarstellungen genannt, die aus einem Bewegungsablauf herausgegriffen sind, wie die Darstellung eines fahrenden Autos.

Weiterhin ist es möglich, eine Verringerung der Datenmenge dadurch zu erreichen, daß die Bilder geringerer Auflösung ein kleineres Format aufweisen als die Bilder der Druckvorlage.

Zweckmäßigerweise überprüft der zentrale Rechner die ihm übermittelten Informationen nach Gestaltungsvorgaben auf Vollständigkeit und Plausibilität, beispielsweise bei einer Geschäftsanzeige das Vorhandensein von Anschrift und Telefonverbindung.

Für die Erstellung von Texten zur Druckvorlage können dem zentralen Rechner die Informationen Schriftart, Punktgröße und Stil angegeben werden, wobei dieser die in einem Zeichencode übermittelten Texte entsprechend diesen Informationen in Grafik umwandelt.

Außer den Darstellungselementen kann der zentrale Rechner dem Computer des Anwenders zusätzliche Informationen über Gestaltungsmöglichkeiten sowie über notwendige Texteingaben übermitteln, wobei anhand der Rückübermittlung der die gewünschte Auswahl des Anwenders darstellenden Parameterdatei diese Auswahl vom zentralen Rechner im hochauflösenden Programm nachvollzogen wird. Auf diese Weise können dem Anwender Möglichkeiten aufgezeigt und Lösungsvorschläge und -hilfen unterbreitet werden.

Das Gestaltungsergebnis des Anwenders kann als lesbare und manuell änderbare Textdatei an den zentralen Rechner ausgegeben werden. Dies ist besonders zweckmäßig, wenn eine Gestaltung mit Abänderungen immer wieder verwendet wird. Für eine solche Wiederverwendung kann das Gestaltungsergebnis als Parameterdatei und/oder als Bilder geringer Auflösung im Zugriffsbereich des zentralen Rechners archiviert werden. Dies reicht als Archivierung aus, da die Grafik hoher Auflösung jederzeit reproduzierbar ist, und hat den Vorteil, daß weniger Speicherplätze benötigt werden. Dem Anwender können dann die archivierten Daten für Abänderungen unmittelbar übermittelt werden und die Reproduktion der hochaufgelösten Grafik kann nach Vornahme dieser Abänderungen erfolgen.

Entsprechend der Ausgestaltung des Programms müssen dem Anwender Gestaltungsrichtlinien vorgegeben werden, die dieser nicht umgehen kann. Entsprechend wird er bei der Anwendung geführt. Beispielsweise werden dem Anwender auswählbare Daten bezüglich der Erstellung der Druckvorlage zur Verfügung gestellt. Er erhält sozusagen einen Katalog mit Gestaltungselementen und möglichen Variationen, aus denen er seine gewünschte Darstellung kombinieren kann.

Der Anwender kann dem zentralen Rechner Zusatzinformationen bezüglich der Weiterbearbeitung und Weiterleitung der Druckvorlage übermitteln, beispielsweise Offsetdruck nach dem Computer-to-plate Verfahren, mit Angabe der Auflage und des Papiers. Bei diesem Beispiel kann der zentrale Rechner die Druckvorlage als Datei direkt an die Druckmaschine geben. Des weiteren können Informationen z.B. zum Erscheinen in Zeitungen, wie die Spaltigkeit der Anzeige, Ausgabe, Rubrik usw. übermittelt werden.

Es kann auch vorgesehen sein, daß der zentrale Rechner bei der Erstellung der Druckvorlage technische Randbedingungen der Herstellung der Drucke berücksichtigt, wie den Punktzuwachs beim Druck, die Farbreihenfolge beim Mehrfarbendruck oder der Rasterwert.

In der gleichen Weise können auch Informationen anderer Art, wie Film- und Tonsequenzen sowie Multimediadarstellungen übermittelt, bearbeitet und weiterverarbeitet werden.

Diese Weiterbildungen des Verfahrens wie der Vorrichtung sind nur beispielhaft, weitere Ausgestaltungen nach den Bedürfnissen des Anwenders und der angestrebten Weiterverarbeitung sind denkbar.

## Patentansprüche

1. Verfahren zur Erstellung einer Druckvorlage mittels eines zentralen Rechners, der über ein Datennetz mit Computern von Anwendern in Verbindung steht, wobei dem Anwender zur Minimierung der Datenmenge Darstellungselemente aus Dateien mit wesentlich geringen Datenmengen zur Verfügung stehen, die Pendants zu entsprechenden grafischen Daten eines hochauflösenden Programms des zentralen Rechners darstellen, letzterer die Informationen über eine vom Anwender gewünschte Darstellung über das Netz erhält, der Darstellung des Anwenders die Pendants des hochauflösenden Programms zuordnet und damit die Druckvorlage in hoher Auflösung erstellt,
**dadurch gekennzeichnet**,
daß der zentrale Rechner über das Datennetz dem Computer des Anwenders ein den Netzbedingungen angepaßtes Anwendergrafikprogramm sowie einen Katalog mit Gestaltungselementen und möglichen Variationen, aus deren der Anwender seine gewünschte Darstellung kombinieren kann, zur Verfügung stellt, welche zur Erstellung einer Grafik in gewünschter Plazierung der Darstellungselemente sowie Größen-, Farb- oder Gestaltungsvariationen als Konzept einer gewünschten Druckvorlage durch den Anwender dienen, wobei die Informationen des Konzepts zur Reduzierung der Datenmenge durch Erfassung der gewünschten Darstellung als Parameterdatei dem zentralen Rechner übermittelt werden und dem zentralen Rechner zur Nachvollziehung des Konzepts des Anwenders in seinem Programm zur Erstellung der Druckvorlage in hoher Auflösung dienen, indem die Darstellungsmöglichkeiten des Anwenderprogramms im zentralen Rechner hinterlegt sind.

2. Verfahren nach Anspruch 1,
**dadurch gekennzeichnet,**
daß der zentrale Rechner die ihm übermittelten Informationen nach Gestaltungsvorgaben auf Vollständigkeit und Plausibilität überprüft.

3. Verfahren nach einem oder beiden der Ansprüche 1 bis 2,
**dadurch gekennzeichnet,**
daß der zentrale Rechner zur Erstellung von Texten zur Druckvorlage die Informationen Schriftart, Punktgröße und Stil erhält und die in einem Zeichencode übermittelten Texte entsprechend dieser Information in hochaufgelöste Grafik umwandelt.

4. Verfahren nach einem oder mehreren der Ansprüche 1 bis 3,
**dadurch gekennzeichnet,**
daß der zentrale Rechner dem Computer des Anwenders Informationen über notwendige Texteingaben übermittelt.

5. Verfahren nach einem oder mehreren der Ansprüche 1 bis 4,
**dadurch gekennzeichnet,**
daß das Gestaltungsergebnis des Anwenders als lesbare und manuell änderbare Textdatei an den zentralen Rechner ausgegeben wird.

6. Verfahren nach einem oder mehreren der Ansprüche 1 bis 5,
**dadurch gekennzeichnet,**
daß das Gestaltungsergebnis als Parameterdatei im Zugriffsbereich des zentralen Rechners archiviert wird.

7. Verfahren nach einem oder mehreren der Ansprüche 1 bis 6,
**dadurch gekennzeichnet,**
daß das Gestaltungsergebnis als Bilder geringer Auflösung im Zugriffsbereich des zentralen Rechners archiviert wird.

8. Verfahren nach Anspruch 6 oder 7,
**dadurch gekennzeichnet,**
daß die archivierten Gestaltungsergebnisse dem Anwender für Abänderungen übermittelbar sind.

9. Verfahren nach einem oder mehreren der Ansprüche 1 bis 8,
**dadurch gekennzeichnet,**
daß dem Anwender auswählbare Daten bezüglich der technischen Randbedingungen der Erstellung der Druckvorlage zur Verfügung stehen.

10. Verfahren nach einem oder mehreren der Ansprüche 1 bis 9,
**dadurch gekennzeichnet**,
daß vom Anwender Zusatzinformationen bezüglich der Weiterbeareitung und Weiterleitung der Druckvorlage an den zentralen Rechner übermittelt werden.

11. Vorrichtung zur Durchführung des Verfahrens nach einem oder mehreren der Ansprüche 1 bis 10 mit einem zentralen Rechner, der über ein Datennetz mit Computern von Anwendern in Verbindung steht, wobei dem Anwender zur Minimierung der Datenmenge Darstellungselemente aus Dateien mit wesentlich geringeren Datenmengen zur Verfügung stehen, die Pendants zu entsprechenden grafischen Daten eines hochauflösenden Programms darstellen, mit dem der zentrale Rechner geladen ist, wobei der zentrale Rechner derart eingerichtet ist, daß er aus von Anwendern gewünschten Darstellungen durch Zuordnung der Pendants die gewünschte Druckvorlage in hoher Auflösung erstellen kann,
**dadurch gekennzeichnet,**
daß der zentrale Rechner ein Mittel zur Übermittlung an die Computer der Anwender ein den Netzbedingungen angepaßtes Anwendergrafikprogramm sowie einen Katalog mit Gestaltungselementen und möglichen Variationen, aus deren der Anwender seine gewünschte Darstellung kombinieren kann, aufweist, wobei das Anwendergrafikprogramm die Erstellung einer Grafik in gewünschter Plazierung der Darstellungselemente sowie Größen-, Farboder Gestaltungsvariationen als Konzept einer gewünschten Druckvorlage durch den Anwender ermöglicht wobei die Informationen des Konzepts zur Reduzierung der Datenmenge durch Erfassung der gewünschten Darstellung, als Parameterdatei dem zentralen Rechner übermittelt werden und dem zentralen Rechner zur Nachvollziehung des Konzepts des Anwenders in seinem Programm zur Erstellung der Druckvorlage in hoher Auflösung dienen, in dem die Darstellungsmöglichkeiten des Anwenderprogramm, im zentralen Rechner hinterlegt sind.

## Claims

1. Method for generating a pre-press by means of a central computer linked with users' computers via a data network, reproduction elements from files with substantially smaller data volume being at the user's disposal for the minimisation of the data volume, the aforesaid files representing equivalents to the corresponding graphic data of a high definition software of the central computer, the ladder receiving the information on the design chosen by the user via the network and assigning the user's design to the equivalents of the high definition software and thus generating the pre-press in high definition.
**characterised by the fact**
that via the data network, the central computer makes available to the user's computer a user graphic software adapted to the requirements of a network as well as a catalogue of design elements and their possible variations, on the basis of which the user can arrange his design, the aforesaid elements serving the user for generating of a graphic in the chosen location of the design elements as well as variations in size, colour or shape as a concept of a chosen pre-press, the information on this concept being transferred to the central computer in form of parameter files to reduce the data volume by registration of the selected design and the aforesaid information serving the central computer for the comprehension of the user's concept in its own software in order to generate the high definition pre-press, the capacities of reproduction of the user's software being memorised in the central computer.

2. Method according to clam 1
**characterised by the fact**
that the central computer checks the information transferred according to a given design on completeness and plausibility.

3. Method according to one or both of the claims I to 2
**characterised by the fact**
that the central computer receives the information on fonts, point size and style to generate texts for the pre-press and that the aforesaid central computer transforms the texts transferred in a sign code according to the above mentioned information into a high definition graphic.

4. Method according to one or several claims 1 to 3
**characterised by the fact**
that the central computer transfers information on the required text inputs to the user's computer.

5. Method according to one or several claims 1 to 4
**characterised by the fact**
that the user's final design is transferred to the central computer in form of a legible text file which can be modified manually.

6. Method according to one or several claims 1 to 5
**characterised by the fact**
that the final design is recorded in florm of a parameter file accessible to the central computer.

7. Method according to one or several claims 1 to 6
**characterised by the fact**
that the final design is recorded in form of low definition pictures accessible to the central computer.

8. Method according to claim 6 or 7
**characterised by the fact**
that the recorded final designs are transferable to the user for modification.

9. Method according to one or several claims 1 to 8
**characterised by the fact**
that data to be chosen from and relating to the technical subsidiary conditions for generating the pre-press are at the user's disposal.

10. Method according to one or several claims 1 to 9
**characterised by the fact**
that the user transfers additional information relating to the processing and the destination of the pre-press to the central computer.

11. Apparatus for the implementation of the method according to one or several of the claims 1 to 10 with a central computer linked to users' computers via a data network, whilst design elements from files with substantially smaller data volume being at the user's disposal for the minimisation of the data volume, the aforesaid files representing equivalents to corresponding graphic data of a high definition software which the central computer is loaded with, this central computer being prepared in such a manner to be able to generate the chosen pre-press in high definition by assignment to the equivalents and on the basis of designs selected by the users.
**characterised by the fact**
that the central computer shows a means of transfer to the users' computers, a users' graphic software adapted to the network conditions as well as a catalogue of design elements and their possible variations on the basis of which the user can arrange his design, the user's graphic software enabling the user to generate a graphic in the selected location of the design elements as well as of variations in size, colour or arrangement in a selected pre-press as a concept for a chosen pre-press, the concept information for the reduction of the data volume being transferred to the central computer by input of the chosen design in form of parameter files and serving the central computer to transform the user's concept in the software of the aforesaid central computer in order to generate the high definition pre-press, the possibilities of design of the user's software being memorised in the central computer.

## Revendications

1. Procédé pour l'élaboration d'une maquette d'impression au moyen d'un calculateur central qui est relié aux ordinateurs d'utilisateurs par l'intermédiaire d'un réseau de données, dans un but de minimisation de la quantité de données l'utilisateur ayant à sa disposition des éléments de représentation issus de fichiers comprenant une quantité de données sensiblement moindre qui représentent les pendants de données graphiques correspondantes d'un programme à haute résolution du calculateur central, lequel obtient les informations concernant une réalisation souhaitée par l'utilisateur via le réseau et associe la représentation de l'utilisateur aux pendants du programme à haute résolution pour réaliser ainsi la maquette d'impression en haute résolution,
caractérisé en ce que
par l'intermédiaire du réseau de données le calculateur central peut mettre à disposition de l'ordinateur de l'utilisateur un programme graphique utilisateur adapté à l'environnement du réseau ainsi qu'un catalogue comportant des éléments de composition et des variations possibles à partir desquels l'utilisateur peut combiner sa représentation souhaitée et qui servent à l'élaboration d'un graphique suivant un placement souhaité des éléments de représentation et des variations de taille, de couleur ou de composition en tant que concept d'une maquette d'impression souhaitée par l'utilisateur, les informations du concept visant la réduction de la quantité de données par la saisie de la représentation souhaitée étant transmises au calculateur central sous forme de fichier paramètre et étant destinées au suivi du concept de l'utilisateur par le calculateur central dans son programme pour l'élaboration de la maquette d'impression à haute résolution, en déposant les possibilités de représentation du programme utilisateur dans le calculateur central.

2. Procédé selon la revendication 1,
caractérisé en ce que
le calculateur central vérifie l'intégralité et la plausibilité des informations qui lui sont transmises selon des prescriptions de composition.

3. Procédé selon l'une ou les deux revendications 1 à 2,
caractérisé en ce que
le calculateur central obtient les informations sur la police la taille du point et le style pour l'élaboration de textes de la maquette d'impression et convertit les textes transmis en code signe en fonction de ces informations en un graphique de haute résolution.

4. Procédé selon l'une ou plusieurs des revendications 1 à 3,
caractérisé en ce que
le calculateur central transmet à l'ordinateur de l'utilisateur des informations sur les entrées de texte nécessaires.

5. Procédé selon l'une ou plusieurs des revendications 1 à 4,
caractérisé en ce que
le résultat de composition de l'utilisateur est délivré au calculateur central sous forme de fichier texte lisible et manuellement modifiable.

6. Procédé selon l'une ou plusieurs des revendications 1 à 5,
caractérisé en ce que
le résultat de mise en page est archivé sous forme de fichier paramètre dans la zone d'accès du calculateur central.

7. Procédé selon l'une ou plusieurs des revendications 1 à 6,
caractérisé en ce que
le résultat de composition est archivé sous forme d'images de basse résolution dans la zone d'accès du calculateur central.

8. Procédé selon la revendication 6 ou 7,
caractérisé en ce que
les résultats de composition archivés sont transmissibles à l'utilisateur en vue de modifications.

9. Procédé selon l'une ou plusieurs des revendications 1 à 8,
caractérisé en ce que
l'utilisateur dispose de données sélectionnables concernant les conditions marginales techniques de l'élaboration de la maquette d'impression.

10. Procédé selon l'une ou plusieurs des revendications 1 à 9,
caractérisé en ce que
l'utilisateur transmet au calculateur central des informations supplémentaires concernant le traitement et la destination de la maquette d'impression.

11. Dispositif pour la mise en oeuvre du procédé selon l'une ou plusieurs des revendications 1 à 10, comprenant un calculateur central qui est relié aux ordinateurs d'utilisateurs par l'intermédiaire d'un réseau de données, dans un but de minimisation de la quantité de données l'utilisateur ayant à sa disposition des éléments de représentation issus de fichiers comprenant une quantité de données sensiblement moindre qui représentent les pendants de données graphiques correspondantes d'un programme à haute résolution qui est chargé dans le calculateur central, le calculateur central étant agencé de manière à pouvoir élaborer la maquette d'impression souhaitée à partir des représentations souhaitées de l'utilisateur par allocation des pendants,
caractérisé en ce que
le calculateur central présente un moyen de transmission aux ordinateurs des utilisateurs, un programme graphique d'utilisateur adapté à l'environnement du réseau ainsi qu'un catalogue comprenant des éléments graphiques et des variations possibles, à partir desquels l'utilisateur peut combiner sa représentation souhaitée, le programme graphique d'utilisateur permettant l'élaboration d'un graphique avec le placement voulu des éléments de représentation et les variations de tailles, de teinte ou de composition en tant que concept d'une maquette d'impression recherchée par l'utilisateur, les informations du concept étant transmises sous forme de fichier paramètre au calculateur central en vue de la réduction de la quantité de données par saisie de la représentation souhaitée, et servant au calculateur central à suivre le concept de l'utilisateur dans son programme afin de réaliser la maquette d'impression de haute résolution, en disposant les possibilités de représentation du programme utilisateur dans le calculateur central.
